# EUROPEAN PATENT APPLICATION

(11) **EP 3 637 784 A1**
(43) Date of publication of application: **15.04.2020**
(21) Application number: 18813628.7
(22) Date of filing: 11.05.2018
(51) Int. Cl.: H04N 21/236, H04N 21/434

(54) **VIDEO TRANSMISSION DEVICE AND VIDEO RECEPTION DEVICE**

(30) Priority: 09.06.2017 JP 2017114690
(71) Applicant: Sony Semiconductor Solutions Corporation, Atsugi-shi, Kanagawa 243-0014 (JP)
(72) Inventor: YOSHIMOCHI, Naoki, Atsugi-shi Kanagawa 243-0014 (JP); SUGIOKA, Tatsuya, Atsugi-shi Kanagawa 243-0014 (JP)
(74) Representative: MFG Patentanwälte Meyer-Wildhagen Meggle-Freund Gerhard PartG mbB
(86) International application number: PCT/JP2018/018349
(87) International publication number: WO 2018/225449

(57) **Abstract**

A picture transmission device according to an embodiment of the present disclosure includes a transmission section that sends image data of ROIs in an image in Payload Data of a Long Packet and sends information about the ROIs in Embedded Data.

## Description

### Technical Field

The present disclosures relate to picture transmission device and picture reception device.

### Background Art

In recent years, applications for transmitting large amounts of data having a large data volume have been increasing. Transmission systems are likely to be heavily loaded, and in the worst case, there is a possibility that the transmission systems go down and data transmission is not performed.

In order to prevent the transmission systems from going down, for example, instead of transmitting the entirety of a photographed image, only a partial image obtained by specifying an object to be photographed and cutting out the identified object has been transmitted. It is to be noted that, for example, the following patent literatures describe cutting out of a partial image from a photographed image.

### Citation list

### Patent Literature

PTL 1: Japanese Unexamined Patent Application Publication No. 2016-201756
PTL 2: Japanese Unexamined Patent Application Publication No. 2014-39219gh
PTL 3: Japanese Unexamined Patent Application Publication No. 2013-164834
PTL 4: Japanese Unexamined Patent Application Publication No. 2012-209831

### Summary of the Invention

Incidentally, as a system used for transmission from an image sensor to an application processor, MIPI (Mobile Industry Processor Interface) CSI (Camera Serial Interface)-2, MIPI CSI-3, or the like is used in some cases. In addition, as a system used for transmission from an application processor to a display, MIPI DSI (Display Serial Interface) or the like is used in some cases. In a case where a partial region (a ROI (Region Of Interest)) extracted from a captured image is to be transmitted with use of these systems, transmission of the ROI may not be easy due to various restrictions. Accordingly, it is desirable to provide a picture transmission device and a picture reception device that make it possible to transmit the ROI even under various restrictions.

A first picture transmission device according to an embodiment of the present disclosure includes a transmission section that sends image data of ROIs in an image in Payload Data of a Long Packet and sends information about the ROIs in Embedded Data. The Payload data of the Long Packet refers to main data (application data) to be transmitted between devices. The Embedded Data refers to additional information that is possible to be embedded in a header or a footer of an image data frame.

In the first picture transmission device according to the embodiment of the present disclosure, the image data of the ROIs in the image is sent in the Payload Data of the Long Packet, and the information about the ROIs is sent in the Embedded Data. This makes it possible to easily extract the image data of the ROIs from a transmission signal in a device that has received the transmission signal sent from the picture transmission device.

A second picture transmission device according to an embodiment of the present disclosure includes a detector that detects a region of overlap on the basis of information about respective ROIs in an image, the region of overlap in which two or more of the ROIs overlap each other. The second picture transmission device further includes a transmission section that sends a plurality of pieces of third image data in Payload Data of a Long Packet, the plurality of pieces of third image data being obtained by omitting second image data of the region of overlap from a plurality of pieces of first image data of the ROIs in the image to avoid the second image data from being included redundantly in the plurality of pieces of fist image data. The transmission section further sends information about the respective ROIs in the image in Embedded Data.

In the second picture transmission device according to the embodiment of the present disclosure, the plurality of pieces of third image data is sent in the Payload Data of the Long Packet, and the information about the respective ROIs in the image is sent in the Embedded Data. This makes it possible to easily extract the image data of the ROIs from a transmission signal in a device that has received the transmission signal sent from the picture transmission device.

A picture reception device according to an embodiment of the present disclosure includes a reception section that receives a transmission signal including image data of ROIs in an image and information about the ROIs, the image data of the ROIs being included in Payload Data of a Long Packet, the information about the ROIs being included in Embedded Data. The picture reception device further includes an information processor that extracts information about the ROIs from the Embedded Data included in the transmission signal received by the reception section, and extracts the image data of the ROIs from the Payload Data of the Long Packet included in the transmission signal received by the reception section on the basis of the extracted information.

In the picture reception device according to the embodiment of the present disclosure, the information about the ROIs is extracted from the Embedded Data included in the transmission signal received by the reception section, and the image data of the ROIs is extracted from the Payload Data of the Long Packet included in the transmission signal received by the reception section on the basis of the extracted information about the ROIs. This makes it possible to easily extract the image data of the ROIs from the transmission signal.

According to the first and second picture transmission devices and the picture reception device according to the embodiments of the present disclosures, it is possible to easily extract the image data of the ROIs from the transmission signal in the device that has received the transmission signal sent from the picture transmission device, which makes it possible to transmit the ROI even under various restrictions. It is to be noted that effects of the present disclosure are not necessarily limited to the effects described here, and may be any of the effects described in this specification.

### Brief Description of the Drawings

[FIG. 1] FIG. 1 is a diagram illustrating a schematic configuration example of a picture transmission system.
[FIG. 2] FIG. 2 is a diagram illustrating a schematic configuration example of a picture transmission device in FIG. 1.
[FIG. 3] FIG. 3 is a diagram illustrating an example of a transmission data generating procedure in a case where two ROIs are included in a captured image.
[FIG. 4] FIG. 4 is a diagram illustrating a configuration example of a packet header.
[FIG. 5] FIG. 5 is a diagram illustrating a configuration example of transmission data.
[FIG. 6] FIG. 6 is a diagram illustrating a configuration example of transmission data.
[FIG. 7] FIG. 7 is a diagram illustrating a configuration example of Payload Data of a Long Packet.
[FIG. 8] FIG. 8 is a diagram illustrating a schematic configuration example of a picture reception device in FIG. 1.
[FIG. 9] FIG. 9 is a diagram illustrating an example of a procedure for generating two ROI images included in a captured image in a case where two images are included in transmission data.
[FIG. 10] FIG. 10 is a diagram illustrating a modification example of a schematic configuration of the picture reception device in FIG. 1.
[FIG. 11] FIG. 11 is a diagram illustrating a modification example of a configuration of one line.
[FIG. 12] FIG. 12 is a diagram illustrating a modification example of a configuration of one line.
[FIG. 13] FIG. 13 is a diagram illustrating a modification example of a schematic configuration of a picture transmission device in FIG. 1.
[FIG. 14] FIG. 14 is a diagram illustrating a configuration example of transmission data.

### Modes for Carrying out the Invention

Some embodiments of the present disclosure are described below in detail with reference to the drawings. The following description is given of specific examples of the present disclosure, and the present disclosure is not limited to the following embodiments.

### <Embodiment>

### [Configuration]

In recent years, in portable devices such as smartphones, camera devices, and the like, capacity of image data to be handled has been increased, and higher speed and lower power consumption have been demanded in data transmission in a device or between different devices. In order to meet such demands, standardization of high-speed interface specifications such as C-PHY specification and D-PHY specification defined by the MIPI alliance has been promoted as coupling interfaces for portable devices and camera devices. The C-PHY specification and the D-PHY specification are physical layer (PHY) interface specifications for communication protocols. In addition, DSI for displays of portable devices and CSI for camera devices exist as upper protocol layers of the C-PHY specification and the D-PHY specification.

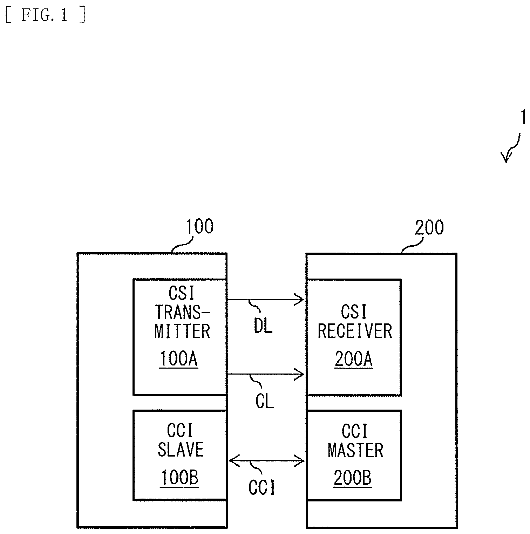

A picture transmission system 1 according to an embodiment of the present disclosure is a system that transmits and receives signals according to MIPI CSI-2 specification, MIPI CSI-3 specification, or MIPI DSI specification. FIG. 1 illustrates an overview of the picture transmission system 1 according to the present embodiment. The picture transmission system 1 is applied to transmission of a data signal, a clock signal and a control signal, and includes a picture transmission device 100 and a picture reception device 200. The picture transmission system 1 includes, for example, a data lane DL, a clock lane CL, and a camera control interface CCI across the picture transmission device 100 and the picture reception device 200. The data lane transmits a data signal such as image data. The clock lane CL transmits a clock signal. The camera control interface CCI transmits a control signal. Although FIG. 1 illustrates an example in which one data lane DL is provided, a plurality of data lanes DL may be provided. The camera control interface CCI is a bi-directional control interface compatible with I²C (Inter-Integrated Circuit) specification.

The picture transmission device 100 is a device that transmits signals according to the MIPI CSI-2 specification, the MIPI CSI-3 specification, or the MIPI DSI specification, and includes a CSI transmitter 100A and a CCI slave 100B. The picture reception device 200 includes a CSI receiver 200A and a CCI master 200B. In the clock lane CL, the CSI transmitter 100A and the CSI receiver 200A are coupled to each other by a clock signal line. In the data lane DL, the CSI transmitter 100A and the CSI receiver 200A are coupled to each other by a clock signal line. In the camera control interface CCI, the CCI slave 100B and the CCI master 200B are coupled to each other by a control signal line.

The CSI transmitter 100A serves as a differential signal transmission circuit that generates a differential clock signal as a clock signal and outputs the differential clock signal to the clock signal line. The CSI transmitter 100A also serves as a differential signal transmission circuit that generates a differential data signal as a data signal and outputs the differential data signal to a data signal line. The CSI receiver 200A serves as a differential signal reception circuit that receives the differential clock signal as the clock signal through the clock signal line and performs predetermined processing on the received differential signal clock signal. The CSI receiver 200A also serves as a differential signal reception circuit that receives the differential data signal as the data signal through the data signal line and performs predetermined processing on the received differential data signal.

### (Picture transmission Device 100)

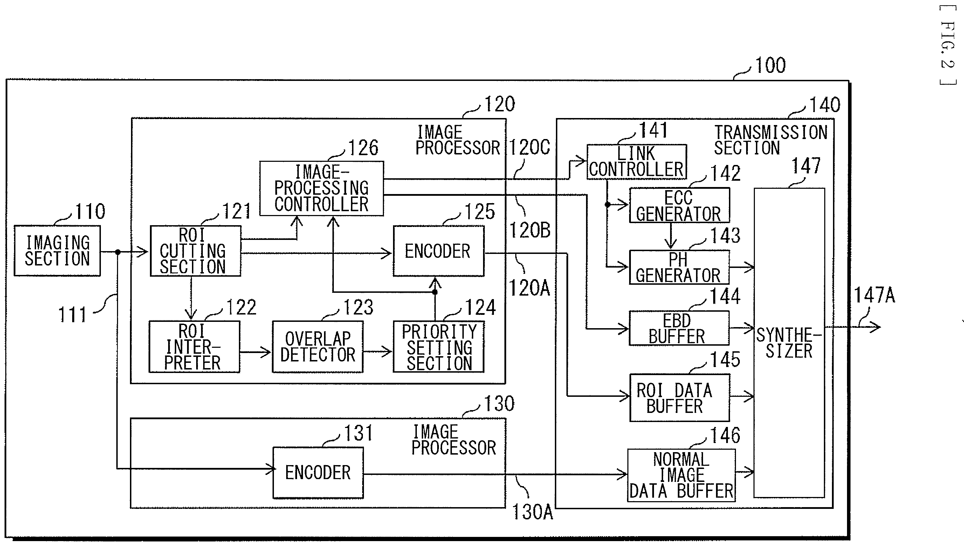

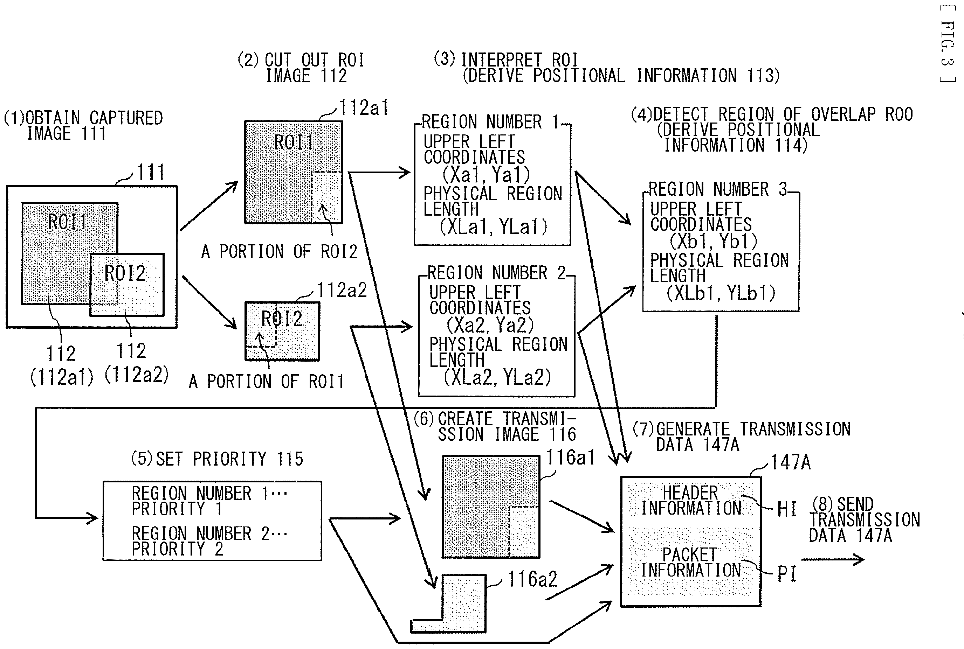

FIG. 2 illustrates an example of a configuration of the picture transmission device 100. The picture transmission device 100 corresponds to a specific example of the CSI transmitter 100A. The picture transmission device 100 includes, for example, an imaging section 110, image processors 120 and 130, and a transmission section 140. The picture transmission device 100 transmits transmission data 147A to the picture reception device 200 through the data lane DL. The transmission data 147A is generated by performing predetermined processing on a captured image 111 obtained by the imaging section 110. FIG. 3 illustrates an example of a procedure for generating the transmission data 147A.

The imaging section 110 converts an optical image signal obtained through, for example, an optical lens into image data. The imaging section 110 includes, for example, a CCD (Charge Coupled Device) image sensor or a CMOS (Complementary Metal Oxide Semiconductor) image sensor. The imaging section 110 includes an analog-to-digital conversion circuit, and converts analog image data into digital image data. A format of the converted data may be a YCbCr format in which a color of a pixel is represented by a luminance component Y and color-difference components Cb and Cr, or may be an RGB format. The imaging section 110 outputs the captured image 111 (digital image data) obtained by imaging to the image processor 120.

The image processor 120 is a circuit that performs predetermined processing on the captured image 111 inputted from the imaging section 110. The image processor 120 performs predetermined processing on the captured image 111 inputted from the imaging section 110 in a case where a control signal providing an instruction for cutting out of a ROI is inputted from the picture reception device 200 through the camera control interface CCI. As a result, the image processor 120 generates various data (120A, 120B, and 120C) and outputs these data to the transmission section 140. The image processor 130 is a circuit that performs predetermined processing on the captured image 111 inputted from the imaging section 110. The image processor 130 performs predetermined processing on the captured image 111 inputted from the imaging section 110 in a case where the control signal providing an instruction for outputting of a normal image is inputted from the picture reception device 200 through the camera control interface CCI. As a result, the image processor 130 generates image data 130A and outputs the image data 130A to transmission section 140.

The image processor 130 includes, for example, an encoder 131. The encoder 131 encodes the captured image 111 to generate compressed image data 130A. The image processor 130 compresses the captured image 111 by, for example, a compression format conforming to the JPEG (Joint Photographic Experts Group) specification or the like as a format of the compressed image data 130A.

The image processor 120 includes, for example, a ROI cutting section 121, a ROI interpreter 122, an overlap detector 123, a priority setting section 124, an encoder 125, and an image-processing controller 126.

The ROI cutting section 121 specifies one or a plurality of objects to be photographed, which is included in the captured image 111 inputted from the imaging section 110, and sets a region of interest ROI for each of the specified objects. The region of interest ROI is, for example, a square-shaped region including the identified object. The ROI cutting section 121 cuts out an image of each region of interest ROI (for example, a ROI image 112 in FIG. 3) from the captured image 111. The ROI cutting section 121 further assigns a region number as an identifier to each set region of interest ROI. For example, in a case where two regions of interest ROI are set in the captured image 111, the ROI cutting section 121 gives a region number 1 to one (for example, a region of interest ROI1 in FIG. 3) of the regions of interest ROI and a region number 2 to the other region of interest ROI (for example, a region of interest ROI2 in FIG. 3). The ROI cutting section 121 stores, for example, assigned identifiers (region numbers) in a storage section. The ROI cutting section 121 stores, for example, each ROI image 112 cut out from the captured image 111 in the storage section. The ROI cutting section 121 further stores, in the storage section, for example, identifiers (region numbers) assigned to respective regions of interest ROI in association with the ROI images 112.

The ROI interpreter 122 derives positional information 113 of the region of interest ROI in the captured image 111 for each of the regions of interest ROI. The positional information 113 includes, for example, upper left coordinates (Xa, Ya) of the region of interest ROI, a length in an X-axis direction of the region of interest ROI, and a length in a Y-axis direction of the region of interest ROI. The length in the X-axis direction of the region of interest ROI is, for example, a physical region length XLa in the X-axis direction of the region of interest ROI. The length in the Y-axis direction of the region of interest ROI is, for example, a physical region length YLa in the Y-axis direction of the region of interest ROI. The physical region length refers to a physical length (data length) of the region of interest ROI. The positional information 113 may include coordinates of a position other than an upper left end of the region of interest ROI. The ROI interpreter 122 stores the derived positional information 113 in the storage section, for example. The ROI interpreter 122 performs storing in the storage section in association with, for example, the identifiers (region numbers) assigned to the regions of interest ROI.

The ROI interpreter 122 may further derive, as the positional information 113, for example, an output region length XLc in the X-axis direction of the region of interest ROI and an output region length YLc in the Y-axis direction of the region of interest ROI for each of regions of interest ROI. The output region length refers to, for example, a physical length (data length) of the region of interest ROI of which resolution has been changed by thinning processing, pixel addition, or the like. The ROI interpreter 122 may derive, for example, sensing information, exposure information, gain information, AD (Analog-Digital) word length, an image format, and the like for each of the regions of interest ROI in addition to the positional information 113, and may store them in the storage section.

The sensing information refers to contents of arithmetic operation on the object included in the region of interest ROI and the supplementary information for subsequent-stage signal processing on the ROI image 112. The exposure information refers to exposure time of the region of interest ROI. The gain information refers to the gain information of the region of interest ROI. The AD word length refers to a word length of data per pixel that has been AD-converted in the region of interest ROI. The image format refers to a format of an image of the region of interest ROI. For example, the ROI interpreter 122 may derive the number of regions of interest ROI (the number of ROIs) included in the captured image 111 and store the number of regions of interest ROI in the storage section.

In a case where a plurality of objects to be photographed are specified in the captured image 111, the overlap detector 123 detects a region of overlap (ROO (Region Of Overlap)) in which two or more regions of interest ROI overlap each other on the basis of the positional information 113 of a plurality of regions of interest ROI in the captured image 111. That is, the overlap detector 123 derives, for each of regions of overlap ROO, positional information 114 of the region of overlap ROO in the captured image 111. For example, the overlap detector 123 stores the derived positional information 114 in the storage section. For example, the overlap detector 123 stores, in the storage section, the derived positional information 114 in association with the region of overlap ROO. The region of overlap ROO is, for example, a square-shaped region having a size equal to or smaller than the smallest region of interest ROI in two or more regions of interest ROI overlapping each other. The positional information 114 includes, for example, upper left coordinates (Xb, Yb) of the region of overlap ROO, a length in the X-axis direction of the region of overlap ROO, and a length in the Y-axis direction of the region of overlap ROO. The length in the X-axis direction of the region of overlap ROO refers to, for example, a physical region length XLb. The length in the Y-axis direction of the region of overlap ROO refers to, for example, a physical region length YLb. The positional information 114 may include coordinates of a position other than the upper left end of the region of interest ROIs may be included.

The priority setting section 124 assigns a priority 115 to each of the regions of interest ROI in the captured image 111. For example, the priority setting section 124 stores the assigned priority 115 in the storage section. For example, the priority setting section 124 stores, in the storage section, the assigned priority 115 in association with the region of interest ROI. The priority setting section 124 may assign the priorities 115 to the respective regions of interest ROI separately from the region numbers assigned to the respective regions of interest ROI, or may assign the region numbers assigned to the respective regions of interest ROI instead of the priorities 115. For example, the priority setting section 124 may store, in the storage section, the priorities 115 in association with the regions of interest ROI, or may store, in the storage section, the region numbers assigned to the respective regions of interest ROI in association with the regions of interest ROI.

The priority 115 is an identifier of each of the regions of interest ROI, and is discrimination information that makes it possible to determine from which of a plurality of regions of interest ROI in the captured image 111 the region of overlap ROO has been omitted. The priority setting section 124 assigns 1 as the priority 115 to one of two regions of interest ROI each including a region of overlap ROO, and assigns 2 as the priority 115 to the other one of the two regions of interest ROI, for example. In this case, the region of overlap ROO is omitted from the region of interest ROI having a larger value of the priority 115 in creation of a transmission image 116 to be described later. It is to be noted that the priority setting section 124 may assign, as the priority 115, the same number as the region number assigned to each of the regions of interest ROI to that region of interest ROI. For example, the priority setting section 124 stores, in the storage section, the priorities 115 assigned to the respective regions of interest ROI in association with the ROI images 112.

The encoder 125 encodes the respective transmission images 116 to generate compressed image data 120A. The encoder 125 compresses the respective transmission images 116 in, for example, a compression format conforming to the JPEG specification as a format of the compressed image data 120A. The encoder 125 generates the respective transmission images 116 prior to performing the above-described compressing processing. The encoder 125 generates a plurality of transmission images 116 obtained by omitting an image 118 of the region of overlap ROO from the plurality of ROI images 112 obtained from the captured image 111 to avoid the image 118 from being included redundantly in the plurality of ROI images 112 obtained from the captured image 111.

The encoder 125 determines from which of the plurality of ROI images 112 the image 118 is to be omitted on the basis of, for example, the priorities 115 assigned to the respective regions of interest ROI. It is to be noted that the encoder 125 may determine from which of the plurality of ROI images 112 the image 118 is to be omitted by using, for example, the region numbers assigned to the respective regions of interest ROI as the priorities 115. The encoder 125 regards, as the transmission image 116 (e.g., a transmission image 116a2 in FIG. 3), an image obtained by omitting the image 118 from the ROI image 112 specified as described above. The encoder 125 regards the ROI image 112 itself as the transmission image 116 (for example, a transmission image 116a1 in FIG. 3) for the ROI image 112 including no region of overlap ROO, and the ROI image 112 from which the image 118 has not been omitted as a result of the above-described determination.

The image-processing controller 126 generates ROI information 120B and frame information 120C, and transmits the ROI information 120B and the frame information 120C to the transmission section 140. The ROI information 120B includes, for example, each positional information 113. The ROI information 120B further includes, for example, at least one of a data type of each of the regions of interest ROI, the number of the regions of interest ROI included in the captured image 111, the region number (or the priority 115) of each of the regions of interest ROI, a data length of each of the regions of interest ROI, or the image format of each of the regions of interest ROI. The frame information 120C includes, for example, a virtual channel number assigned to each frame, a data type of each of the regions of interest ROI, a Payload length for each line, and the like. The data type includes, for example, YUV data, RGB data, RAW data, or the like. The data type further includes, for example, ROI-format data, normal-format data, or the like. The Payload length is, for example, the number of pixels included in a Payload of a Long Packet, and is, for example, the number of pixels per region of interest ROI. Here, the Payload refers to main data (application data) to be transmitted between the information transmission device 100 and the information reception device 200. The Long Packet refers to a packet provided between a packet head PH and a packet footer PF.

The transmission section 140 is a circuit that generates and sends transmission data 147A on the basis of various data (120A, 120B, 120C, and 130A) inputted from the image processors 120 and 130. The transmission section 140 sends the ROI information 120B about the respective region of interest ROI in the captured image 111 in Embedded Data. The transmission section 140 further sends image data (the compressed image data 120A) of the respective regions of interest ROI in the Payload Data of the Long Packet in a case where a control signal providing an instruction for cutting out of a ROI is inputted from the picture reception device 200 through the camera control interface CCI. At this time, the transmission section 140 sends the image data (the compressed image data 120A) of the respective regions of interest ROI through a mutually common virtual channel. In addition, the transmission section 140 sends the image data (the compressed image data 120A) of the respective regions of interest ROI in an image data frame, and sends the ROI information 120B about the respective regions of interest ROI in a header of the image data frame. The transmission section 140 further sends normal image data (compressed image data 130A) in the Payload Data of the Long Packet in a case where a control signal providing an instruction for outputting of a normal image is inputted from the picture reception device 200 through the camera control interface CCI.

The transmission section 140 includes, for example, a LINK controller 141, an ECC generator 142, a PH generator 143, an EBD buffer 144, a ROI data buffer 145, a normal image data buffer 146, and a synthesizer 147. The LINK controller 141, the ECC generator 142, the PH generator 143, the EBD buffer 144, and the ROI data buffer 145 performs outputting to the synthesizer 147 in a case where a control signal providing an instruction for cutting out of a ROI is inputted from the picture reception device 200 through the camera control interface CCI. The normal image data buffer 146 performs outputting to the synthesizer 147 in a case where a control signal providing an instruction for outputting of a normal image is inputted from the picture reception device 200 through the camera control interface CCI.

It is to be noted that the ROI data buffer 145 may also serve as the normal image data buffer 146. In this case, the transmission section 140 may include, between an output terminal of each of the ROI data buffer 145 and the ROI data buffer 145 and an input terminal of the synthesizer 147, a selector that selects one of outputs of the ROI data buffer 145 and the ROI data buffer 145.

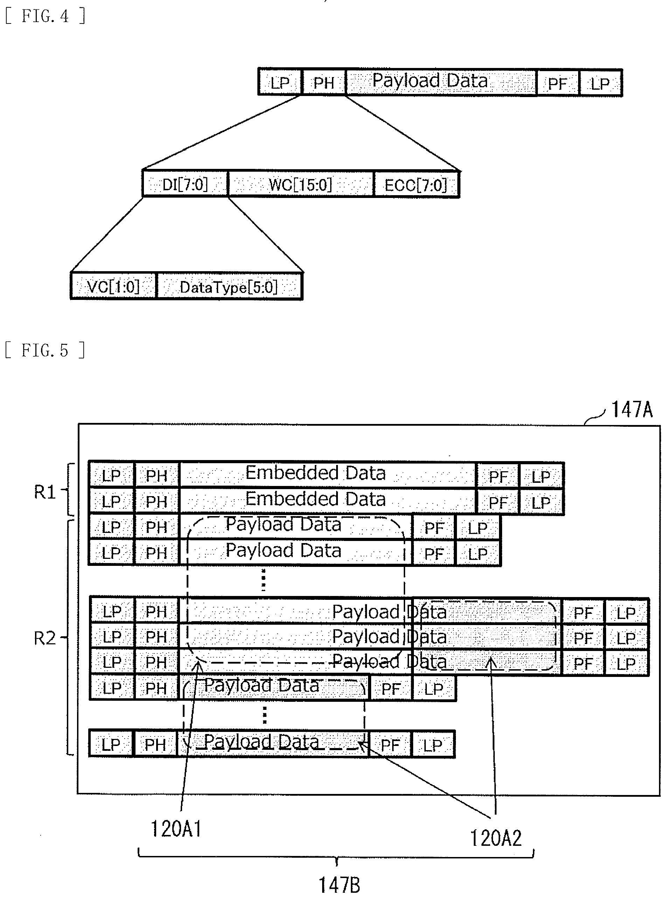

For example, the LINK controller 141 outputs the frame information 120C line by line to the ECC generator 142 and the PH generator 143. On the basis of, for example, data (e.g., a virtual channel number, a data type of each of the regions of interest ROI, a Payload length for each line, and the like) of one line in the frame information 120C in the frame information 120C, the ECC generator 142 generates an error-correcting code for the line. For example, the ECC generator 142 outputs the generated error-correcting code to the PH generator 143. The PH generator 143 generates a packet header PH for each line with use of, for example, the frame information 120C and the error-correcting code generated by the ECC generator 142. At this time, the packet header PH is, for example, a packet header of the Payload Data of the Long Packet, as illustrated in FIG. 4. The packet header PH includes, for example, DI, WC, and ECC. The WC indicates a region for indicating the termination of a packet to the information reception device 200 by the number of words. The WC includes, for example, the Payload length, and includes, for example, the number of pixels per region of interest ROI. The ECC indicates a region that stores a value for correcting a bit error. The ECC includes the error-correcting code. The DI indicates a region that stores a data identifier. The DI includes a VC (virtual channel) number and a Data Type (the data type of each of the regions of interest ROI). The VC (virtual channel) is a concept introduced for packet flow control is a mechanism for supporting a plurality of independent data streams sharing the same link. The PH generator 143 outputs the generated packet header PH to the synthesizer 147.

The EBD buffer 144 temporarily stores the ROI information 120B, and outputs the ROI information 120B as Embedded Data to the synthesizer 147 at a predetermined time. The Embedded Data refers to additional information that is possible to be embedded in a header or a footer of an image data frame (see FIG. 5, below). The Embedded Data includes, for example, ROI information 120B.

The ROI data buffer 145 temporarily holds the compressed image data 120A, and outputs the compressed image data 120A as the Payload Data of the Long Packet to the synthesizer 147 at a predetermined timing. The ROI data buffer 145 outputs the compressed image data 120A as the Payload Data of the Long Packet to the synthesizer 147 in a case where a control signal providing an instruction for cutting out of a ROI is inputted from the picture reception device 200 through the camera control interface CCI. The normal image data buffer 146 temporarily holds the compressed image data 130A, and outputs the compressed image data 130A as the Payload Data of the Long Packet to the synthesizer 147 at a predetermined timing. The normal image data buffer 146 outputs the compressed image data 130A as the Payload Data of the Long Packet to the synthesizer 147 in a case where a control signal providing an instruction for outputting of a normal image is inputted from the picture reception device 200 through the camera control interface CCI.

The synthesizer 147 generates the transmission data 147A on the basis of inputted data (the compressed image data 130A) in a case where a control signal providing an instruction for outputting of a normal image is inputted from the picture reception device 200 through the camera control interface CCI. The synthesizer 147 outputs the generated transmission data 147A to the picture reception device 200 through the data lane DL. In contrast, the synthesizer 147 generates the transmission data 147A on the basis of various inputted data (the packet header PH, the ROI information 120B, and the compressed image data 120A) in a case where a control signal providing an instruction for cutting out of a ROI is inputted from the picture reception device 200 through the camera control interface CCI. The synthesizer 147 outputs the generated transmission data 147A to the picture reception device 200 through the data lane DL. That is, the synthesizer 147 puts the Data Type (the data type of each of the regions of interest ROI) in the packet header PH of the Payload Data of the Long Packet, and sends the Data Type. In addition, the synthesizer 147 sends the image data (the compressed image data 120A) of the respective regions of interest ROI through a mutually common virtual channel.

The transmission data 147A includes, for example, an image data frame as illustrated in FIG. 5. The image data frame generally includes a header region, a packet region, and a footer region. In FIG. 5, the footer region is not illustrated for the sake of convenience. A frame header region R1 of the transmission data 147A includes Embedded Data. At this time, the Embedded Data includes the ROI information 120B. In FIG. 5, a packet region R2 of the transmission data 147A includes Payload Data of the Long Packet for each line, and further includes the packet header PH and the packet footer PF at positions between which the Payload Data of the Long Packet is sandwiched. Further, low power modes LP are included at positions between which the packet header PH and the packet footer PF are sandwiched.

The packet header PH includes, for example, the DI, the WC, and the ECC. The WC includes, for example, the Payload length, and include, for example, the number of pixels per region of interest ROI. The ECC includes the error-correcting code. The DI includes the VC (virtual channel number) and the Data Type (the data type of each of the regions of interest ROI). In the present embodiment, a mutually common virtual channel number is assigned to the VCs of respective lines. In addition, in FIG. 5, the packet region R2 of the transmission data 147A includes the compressed image data 147B. The compressed image data 147B includes one piece of the compressed image data 120A or a plurality of pieces of the compressed image data 120A. Here, in FIG. 5, a packet group closer to the packet header PH includes, for example, the compressed image data 120A (120A1) of the transmission image 116a1 in FIG. 3, and a packet group distant from the packet header PH includes, for example, the compressed image data 120A (120A2) of the transmission image 116a2 in FIG. 3. These two pieces of compressed image data 120A1 and 120A2 configures the compressed image data 147B. The Payload Data of the Long Packet for each line includes pixel data for one line in the compressed image data 147B.

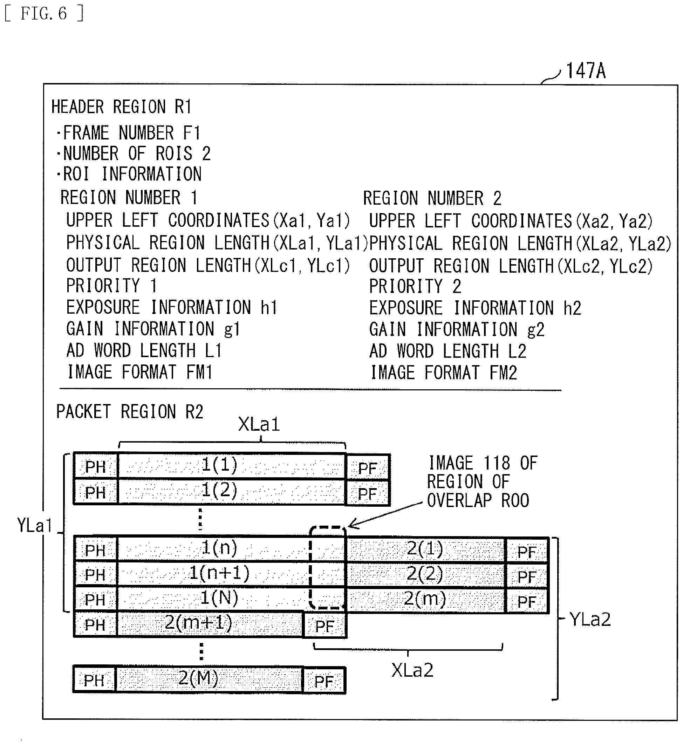

FIG. 6 illustrates a configuration example of the transmission data 147A. The transmission data 147A includes, for example, the frame header region R1 and the packet region R2. It is to be noted that FIG. 6 illustrates an example of contents of the frame header region R1 in detail. In addition, in FIG. 6, the low power modes LP are not illustrated.

The frame header region R1 includes, for example, a frame number F1 as an identifier of the transmission data 147A. The frame header region R1 includes information about the compressed image data 147B included in the packet region R2. The frame header region R1 includes, for example, the number of the compressed image data 120A included in the compressed image data 147B (the number of ROIs), and information (ROI information 120B) about the ROI image 112 corresponding to each of the compressed image data 120A included in the compressed image data 147B.

The synthesizer 147 provides the compressed image data 147B separately for each pixel row of the compressed image data 120A in the packet region R2 of the transmission data 147A, for example. Accordingly, the packet region R2 of the transmission data 147A does not include compressed image data corresponding to the image 118 of the region of overlap ROO redundantly. In addition, the synthesizer 147 omits a pixel row not corresponding to the transmission image 116 of the captured image 111 in the packet region R2 of the transmission data 147A, for example. Accordingly, the packet region R2 of the transmission data 147A does not include the pixel row not corresponding to each of the transmission images 116 of the captured image 111. It is to be noted that in the packet region R2 in FIG. 6, a portion surrounded by a broken line corresponds to the compressed image data of the image 118 of the region of overlap ROO.

A boundary between a packet group closer to the packet header PH (e.g., 1(n) in FIG. 6) and a packet group distant from the packet header PH (e.g., 2(1) in FIG. 6) is specified by a physical region length XLa1 of the ROI image 112 corresponding to compressed image data of the packet group closer to the packet header PH (e.g., 1(n) in FIG. 6). In the compressed image data corresponding to the image 118 of the region of overlap ROO included in the packet group closer to the packet header PH (e.g., 1(n) in FIG. 6), a start position of the packet is specified by a physical region length XLa2 of the ROI image 112 corresponding to the packet group distant from the packet header PH (e.g., 2 (1) in FIG. 6).

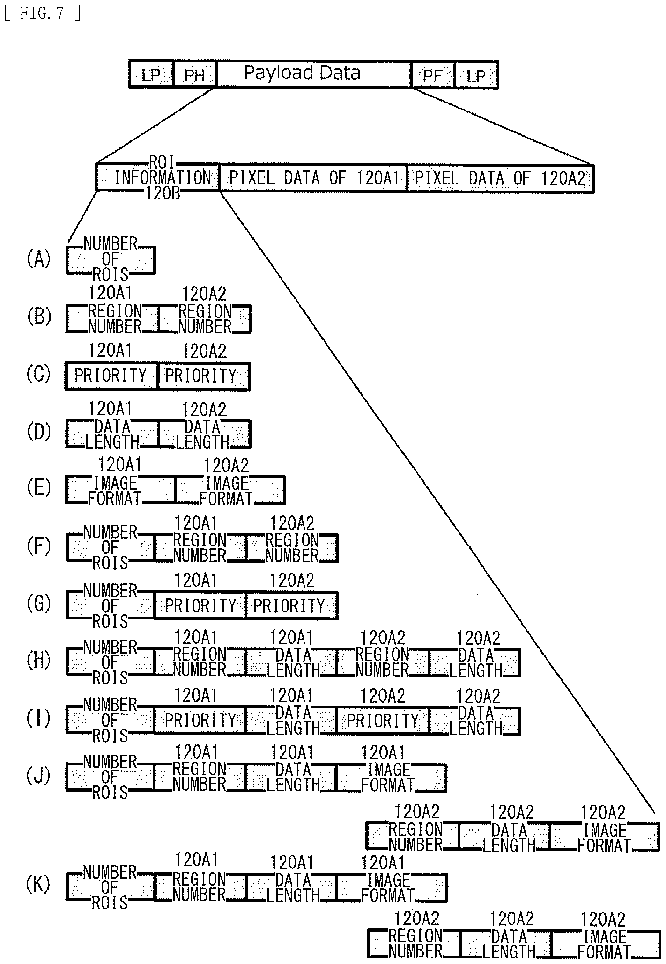

The synthesizer 147 may put, for example, the ROI information 120B in the Payload Data of the Long Packet as illustrated in FIG. 7, in addition to the pixel data for one line in the compressed image data 147B, for example, in a case where the Payload Data of the Long Packet is generated line by line in the packet region R2 of the transmission data 147A. That is, the synthesizer 147 may put the ROI information 120B in the Payload Data of the Long Packet and send the ROI information 120B. At this time, the ROI information 120B includes, for example, at least one of the number of regions of interest ROI (the number of ROIs) included in the captured image 111, the region number (or the priority 115) of each of the regions of interest ROI, the data length of each of the regions of interest ROI, or the image format of each of the regions of interest ROI, as illustrated in FIGs. 7(A) to 7(K). The ROI information 120B is preferably provided at an end on side of the packet header PH (i.e., at the head of the Payload Data of the Long Packet) in the Payload Data of the Long Packet.

### (Picture reception Device 200)

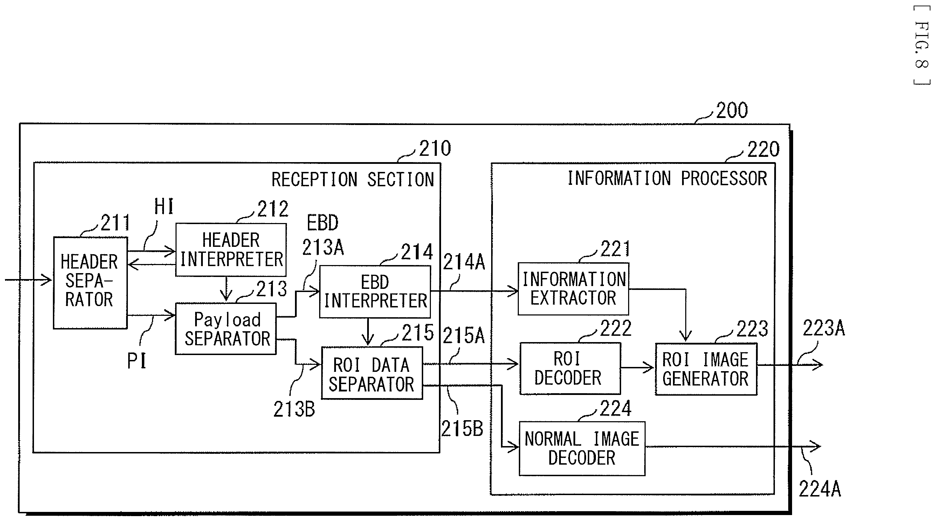

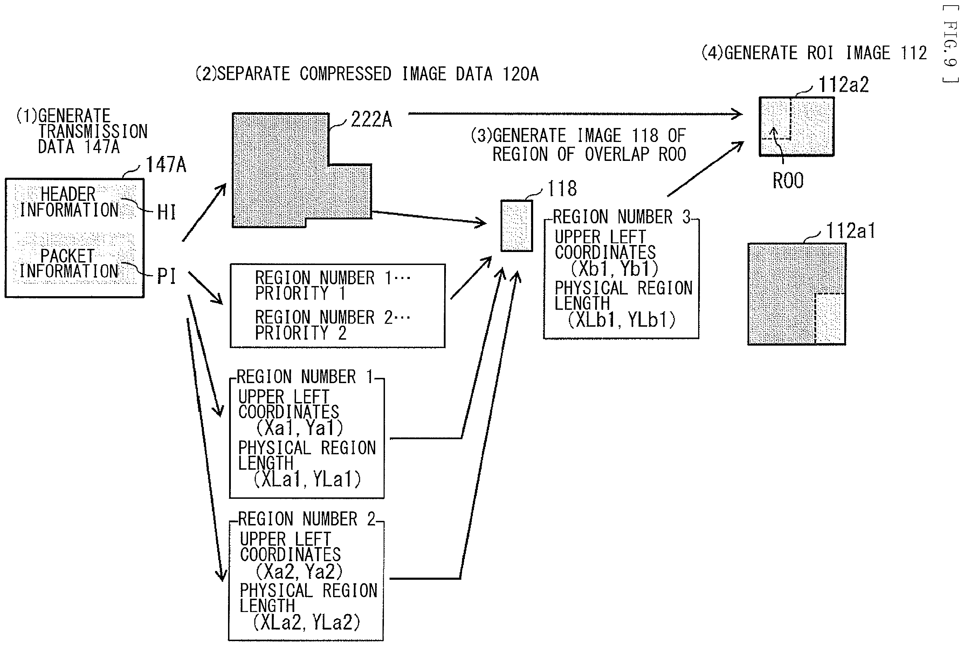

Next, description is given of the picture reception device 200. FIG. 8 illustrates an example of a configuration of the picture reception device 200. FIG. 9 illustrates an example of a procedure for generating a ROI image 223A in the picture reception device 200. The picture reception device 200 is a device that receives signals according to a specification in common with the picture transmission device 100 (e.g., the MIPI CSI-2 specification, the MIPI CSI-3 specification, or the MIPI DSI specification). The picture reception device 200 includes, for example, a reception section 210 and an information processor 220. The reception section 210 is a circuit that receives the transmission data 147A outputted from the picture transmission device 100 through the data lane DL, and performs predetermined processing on the received transmission data 147A, thereby generating various data (214A, 215A, and 215B), and outputting the data to the information processor 220. The information processor 220 is a circuit that generates the ROI image 223A on the basis of various data (214A and 215A) received from the reception section 210, and generates a normal image 224A on the basis of data (215B) received from the reception section 210.

The reception section 210 includes, for example, a header separator 211, a header interpreter 212, a Payload separator 213, an EBD interpreter 214, and a ROI data separator 215.

The header separator 211 receives the transmission data 147A from the picture transmission device 100 through the data lane DL. That is, the header separator 211 receives the transmission data 147A in which the ROI information 120B about the respective regions of interest ROI in the captured image 111 is included in the Embedded Data and the image data (the compressed image data 120A) of the respective regions of interest ROI is included in the Payload Data of the Long Packet. The header separator 211 separates the received transmission data 147A into a frame header region R1 and a packet region R2. The header interpreter 212 specifies a position of the Payload Data of the Long Packet included in the packet region R2 on the basis of data (specifically, the Embedded Data) included in the frame header region R1. The Payload separator 213 separates the Payload Data of the Long Packet included in the packet region R2 from the packet region R2 on the basis of the position of the Payload Data of the Long Packet specified by the header interpreter 212.

The EBD interpreter 214 outputs the Embedded Data as EBD data 214A to the information processor 220. The EBD interpreter 214 further determines, from the data type included in the Embedded Data, whether the image data included in the Payload Data of the Long Packet is the compressed image data 120A of image data 116 of a ROI or the compressed image data 130A of the normal image data. The EBD interpreter 214 outputs a result of such determination to the ROI data separator 215.

In a case where the image data included in the Payload Data of the Long Packet is the compressed image data 120A of the image data 116 of the ROI, the ROI data separator 215 outputs the Payload Data of the Long Packet as Payload Data 215A to the information processor 220 (specifically, a ROI decoder 222). In a case where the image data included in the Payload Data is the compressed image data 130A of the normal image data, the ROI data separator 215 outputs the Payload Data of the Long Packet as Payload Data 215B to the information processor 220 (specifically, a normal image decoder 224). In a case where the RIO information 120B is included in the Payload Data of the Long Packet, the Payload Data215A includes the RIO information 120B and pixel data for one line in the compressed image data 147B.

The information processor 220 extracts the ROI information 120B from the Embedded Data included in the EBD data 214A. The information processor 220 extracts an image (the ROI image 112) of each of the regions of interest ROI in the captured image 111 from the Payload Data of the Long Packet included in the transmission data 147A received by the reception section 210 on the basis of the ROI information 120B extracted by an information extractor 221. The information processor 220 includes, for example, the information extractor 221, the ROI decoder 222, a ROI image generator 223, and the normal image decoder 224.

The normal image decoder 224 decodes the Payload Data 215B to generate the normal image 224A. The ROI decoder 222 decodes the compressed image data 147B included in the Payload Data215A to generate image data 222A. The image data 222A includes one or a plurality of transmission images 116.

The information extractor 221 extracts the ROI information 120B from the Embedded Data included in the EBD data 214A. The information extractor 221 extracts, for example, the number of regions of interest ROI included in the captured image 111, the region number (or the priority 115) of each of the regions of interest ROI, the data length of each of the regions of interest ROI, and the image format of each of the regions of interest ROI from the Embedded Data included in the EBD data 214A. That is, the transmission data 147A includes the region number (or the priority 115) of the region of interest ROI corresponding to each of the transmission images 116 as discrimination information that makes it possible to determine from which of the plurality of transmission images 116 obtained from the transmission data 147A the image 118 of the region of overlap ROO has been omitted.

The ROI image generator 223 detects the region of overlap ROO in which two or more regions of interest ROI overlap with each other on the basis of the ROI information 120B obtained by the information extractor 221.

The information extractor 221 extracts, for example, coordinates (e.g., upper left coordinates (Xa1, Ya1)), lengths (e.g., physical region lengths XLa1 and YLa1) and the region number 1 (or the priority 115 (=1)) of the region of interest ROI corresponding to the ROI image 112a1 from the Embedded Data included in the EBD data 214A. The information extractor 221 further extracts, for example, coordinates (e.g., upper left coordinates (Xa2, Ya2)), lengths (e.g., physical region lengths XLa2 and YLa2) and the region number 2 (or the priority 115 (=2)) of the region of interest ROI corresponding to the ROI image 112a2 from the Embedded Data included in the EBD data 214A.

At this time, the ROI image generator 223 derives the positional information 114 of the region of overlap ROO on the basis of thus-extracted information (hereinafter referred to as "extraction information 221A"). The ROI image generator 223 derives, for example, coordinates (e.g., upper left coordinates (Xb1, Yb1)) and lengths (e.g., physical region length XLb1 and YLb1)) of the region of overlap ROO as the positional information 114 of the region of overlap ROO.

Instead of obtaining the RIO information 120B from the Embedded Data included in the EBD data 214A, the ROI image generator 223 may obtain the RIO information 120B from the Payload Data215A. In this case, the ROI image generator 223 may detect the region of overlap ROO in which two or more regions of interest ROI overlap each other on the basis of the RIO information 120B included in the Payload Data 215A. In addition, the ROI image generator 223 may extract the extraction information 221A from the RIO information 120B included in the Payload Data 215A, and may derive the positional information 114 of the region of overlap ROO on the basis of the thus-extracted extraction information 221A.

The ROI image generator 223 further generates images (ROI images 112a1 and 112a2) of the respective regions of interest ROI in the captured image 111 on the basis of the image data 222A, the extraction information 221A, and the positional information 114 of the region of overlap ROO. The ROI image generator 223 outputs the generated images as the ROI images 223A.

### [Procedure]

Next, description is given of an example of a data transmission procedure in the picture transmission system 1 with reference to FIGs. 3 and 9.

First, the imaging section 110 outputs the captured image 111 (digital image data) obtained by imaging to the image processor 120. The ROI cutting section 121 specifies two regions of interest ROI1 and ROI2 included in the captured image 111 inputted from the imaging section 110. The ROI cutting section 121 cuts out images (ROI images 112a1 and 112a2) of the regions of interest ROI1 and ROI2 from the captured image 111. The ROI cutting section 121 assigns the region number 1 as an identifier to the region of interest ROI1, and assigns the region number 2 as an identifier to the region of interest ROI2.

The ROI interpreter 122 derives the positional information 113 of the region of interest ROI in the captured image 111 for each of the regions of interest ROI. The ROI interpreter 122 derives upper left coordinates (Xa1, Ya1) of the region of interest ROI1, a length (XLa1) in the X-axis direction of the region of interest ROI1, and a length (YLa1) in the Y-axis direction of the region of interest ROI1 on the basis of the region of interest ROI1. The ROI interpreter 122 derives upper left coordinates (Xa2, Ya2) of the region of interest ROI2, a length (XLa2) in the X-axis direction of the region of interest ROI2, and a length (YLa2) in the Y-axis direction of the region of interest ROI2 on the basis of the region of interest ROI2.

The overlap detector 123 detects the region of overlap ROO in which the two regions of interest ROI1 and ROI2 overlap each other on the basis of the positional information 113 of the two region of interest ROI1 and ROI2 in the captured image 111. That is, the overlap detector 123 derives the positional information 114 of the region of overlap ROO in the captured image 111. The overlap detector 123 derives upper left coordinates (Xb1, Yb1) of the region of overlap ROO, a length (XLb1) in the X-axis direction of the region of overlap ROO, and a length (YLb1) in the Y-axis direction of the region of overlap ROO as the positional information 114 of the region of overlap ROO in the captured image 111.

The priority setting section 124 assigns 1 as the priority 115 to one region, i.e., the region of interest ROI1 of the region of interest ROI1 and ROI2, and assigns 2 as the priority 115 to the other region, i.e., the region of interest ROI2.

The encoder 125 generates two transmission images 116a1 and 116a2 obtained by omitting the image 118 of the region of overlap ROO from the two ROI images 112a1 and 112a2 obtained from the captured image 111 to avoid the image 118 from being included redundantly in the two region of interest ROI1 and ROI2.

The encoder 125 determines from which of the two ROI images 112a1 and 112a2 the image 118 is to be omitted on the basis of the region numbers (or the priorities 115) of the two regions of interest ROI1 and ROI2. The encoder 125 omits the images 118 from the ROI image 112a2 corresponding to the region of interest ROI2 having a larger region number (or priority 115) in the two regions of interest ROI1 and ROI2, thereby generating the transmission image 116a2. The encoder 125 regards the ROI image 112a itself as the transmission image 116a for the ROI image 112a1 having a smaller region number (or priority 115) in the two regions of interest ROI1 and ROI2.

The image-processing controller 126 generates the ROI information 120B and the frame information 120C, and transmits the ROI information 120B and the frame information 120C to the transmission section 140. The transmission section 140 generates the transmission data 147A on the basis of various data (120A, 120B, 120C, and 130A) inputted from the image processors 120 and 130. The transmission section 140 sends the generated transmission data 147A to the picture reception device 200 through the data lane DL.

The reception section 210 receives the transmission data 147A outputted from the picture transmission device 100 through the data lane DL. The reception section 210 performs predetermined processing on the received transmission data 147A to generate the EBD data 214A and the Payload Data 215A, and outputs the EBD data 214A and the Payload Data 215A to the information processor 220.

The information extractor 221 extracts the ROI information 120B from the Embedded Data included in the EBD data 214A. The information extractor 221 extracts coordinates (e.g., upper left coordinates (Xa1, Ya1)), lengths (e.g., physical region lengths XLa1 and YLa1) and the region number 1 (or the priority 115 (=1)) of the region of interest ROI corresponding to the ROI image 112a1 from the Embedded Data included in the EBD data 214A. The information extractor 221 further extracts coordinates (e.g., upper left coordinates (Xa2, Ya2)), lengths (e.g., physical region lengths XLa2 and YLa2) and the region number 2 (or the priority 115 (=2)) of the region of interest ROI corresponding to the ROI image 112a2. The ROI decoder 222 decodes the compressed image data 147B included in the Payload Data 215A to generate the image data 222A.

The ROI image generator 223 derives the positional information 114 of the region of overlap ROO on the basis of thus-extracted information (the extraction information 221A). The ROI image generator 223 derives, for example, coordinates (e.g., upper left coordinates (Xb1, Yb1)) and lengths (e.g., physical region lengths XLb1 and YLb1)) of the region of overlap ROO as the positional information 114 of the region of overlap ROO described above. The ROI image generator 223 further generates images of the respective regions of interest ROI (the ROI images 112a1 and 112a2) in the captured image 111 on the basis of the image data 222A, the extraction information 221A, and the positional information 114 of the region of overlap ROO.

### [Effects]

Next, description is given of effects of the picture transmission system 1 according to the present embodiment.

In recent years, applications for transmitting large amounts of data having a large data volume have been increasing. Transmission systems are likely to be heavily loaded, and in the worst case, there is a possibility that the transmission systems go down and data transmission is not performed.

In order to prevent the transmission systems from going down, for example, instead of transmitting the entirety of a photographed image, only a partial image obtained by specifying an object to be photographed and cutting out the identified object has been transmitted.

Incidentally, as a system used for transmission from an image sensor to an application processor, MIPI CSI-2 is used in some cases. In a case where a ROI is to be transmitted with use of the system, transmission of the ROI may not be easy due to various restrictions.

In contrast, in the present embodiment, the ROI information 120B about the respective regions of interest ROI in the captured image 111 is sent in the Embedded Data, and the image data of each of the regions of interest ROI is sent in the Payload Data of the Long Packet. This makes it possible to easily extract the image data (the ROI image 211) of each of the regions of interest ROI from the transmission data 147A in a device (the picture reception device 200) that has received the transmission data 147A sent from the picture transmission device 100. As a result, it is possible to transmit the regions of interest ROI even under various restrictions.

In addition, in the present embodiment, the image data (the compressed image data 120A) of the respective regions of interest ROI is sent through the mutually common virtual channel. This makes it possible to send a plurality of ROI images 211 in the same packet, which makes it possible to achieve high transmission efficiency while the plurality of ROI images 211 is sent without the need to include an LP mode.

Further, in the present embodiment, the data type of each of the regions of interest ROI is put in the packet header PH of the Payload Data of the Long Packet and is sent. Accordingly, the data type of each of the regions of interest ROI is obtained only by accessing the packet header PHs of the Payload Data of the Long Packet without accessing the Embedded Data. This makes it possible to increase processing speed in the information reception device 200, which makes it possible to achieve high transmission efficiency.

In addition, in the present embodiment, in a case where the ROI information 120B is put in the Payload Data of the Long Packet and is sent, the ROI information 120B is obtained only by accessing the Payload Data of the Long Packet without accessing the Embedded Data. This makes it possible to increase processing speed in the information reception device 200, which makes it possible to achieve high transmission efficiency.

Further, in the present embodiment, the ROI information 120B about the respective regions of interest ROI is extracted from the Embedded Data included in the transmission data 147A, and the image (the ROI image 112) of each of the regions of interest ROI is extracted from the Payload Data of the Long Packet included in the transmission data 147A on the basis of the extracted ROI information 120B. This makes it possible to easily extract the image (the ROI image 112) of each of the regions of interest ROI from the transmission data 147A. As a result, it is possible to transmit the regions of interest ROI even under various restrictions.

### <2. Modification Examples>

### [Modification Example A]

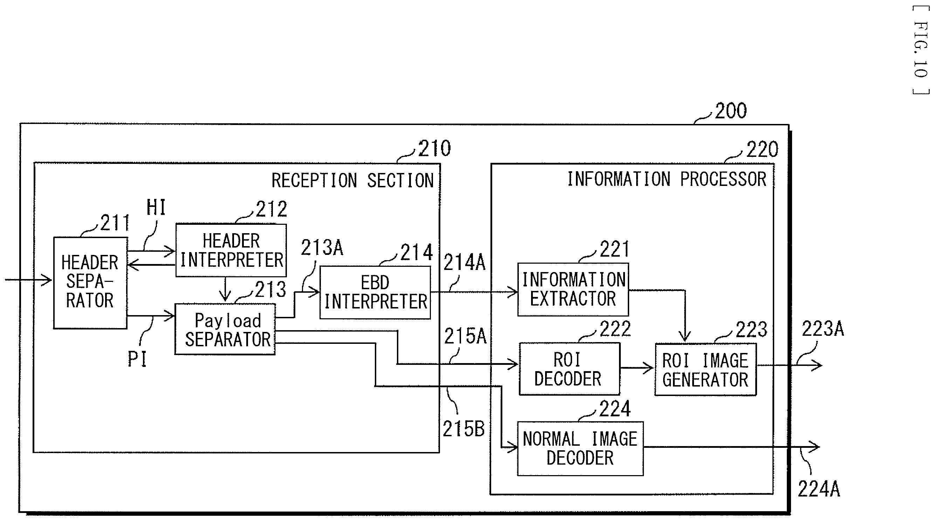

FIG. 10 illustrates a modification example of a configuration of the information transmission device 100 mounted in the communication system 1 according to the foregoing embodiment. In the information transmission device 100 according to the present modification example, the ROI-data separator 215 is omitted, and the Payload separator 213 outputs the Payload Data 215A or the Payload Data 215B.

In the present modification example, the Payload separator 213, the Payload separator 213 determines, from the Data Type (the data type of each of the region of interest ROI) included in the packet header PH of the Payload Data of the Long Packet, whether the image data included in the Payload Data of the Long Packet is the compressed image data 120A of image data 116 of the ROI or the compressed image data 130A of the normal image data. As a result, in a case where the image data included in the Payload Data of the Long Packet is the compressed image data 120A of the image data 116 of the ROI, the Payload separator 213 outputs the Payload Data of the Long Packet as the Payload Data215A to the information processor 220 (specifically, the ROI decoder 222). In a case where the image data included in the Payload Data of the Long Packet is the compressed image data 130A of the normal image data, the Payload separator 213 outputs the Payload Data of the Long Packet as the Payload Data 215B to the information processor 220 (specifically, the normal image decoder 224).

In the present modification example, it is possible to determine the data type of each of the regions of interest ROI only by accessing the packet header PH of the Payload Data of the Long Packet without accessing the Embedded Data. This makes it possible to increase processing speed in the information reception device 200, which makes it possible to achieve high transmission efficiency.

### [Modification Example B]

In the communication system 1 according to the foregoing embodiment, the packet header PH of the Payload Data of the Long Packet may not include the Data Type (the data type of each of the regions of interest ROI). Even in such a case, it is possible to determine, from the data type included in the Embedded Data, whether the image data included in the Payload Data of the Long Packet is the compressed image data 120A of the image data 116 of the region of interest ROI or the compressed image data 130A of the normal image data. This cause the data size of the packet header PHs to be reduced, which makes it possible to reduce transmission capacity.

### [Modification Example C]

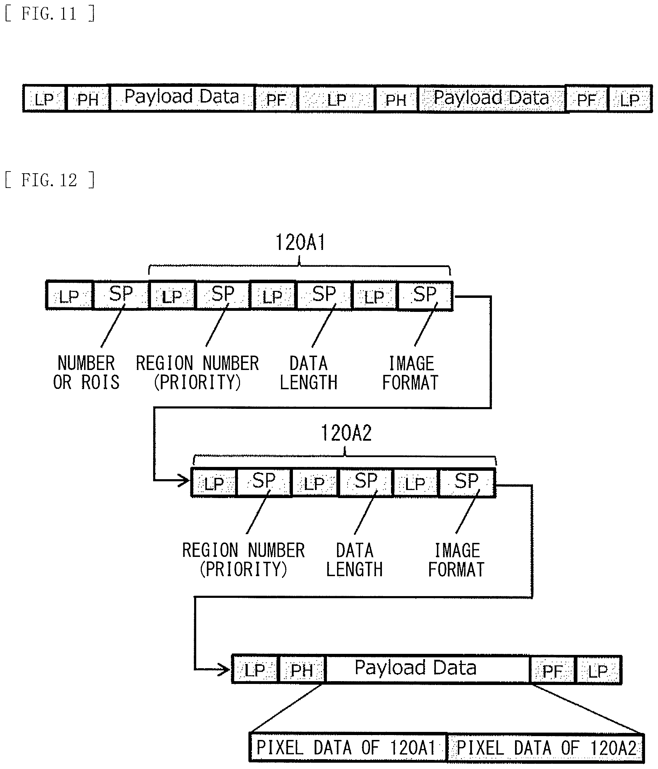

In the communication system 1 according to the foregoing embodiment, the synthesizer 147 sends the image data (the compressed image data 120A) of the respective regions of interest ROI through the mutually common virtual channel. However, the synthesizer 147 may send the image data (the compressed image data 120A) of the respective regions of interest ROI through virtual channels different from each other. However, in this case, for example, as illustrated in FIG. 11, the low power mode LP is included between the Payload Data of two Long Packets corresponding to different regions of interest ROI.

Incidentally, including the low power mode LP between the Payload Data of the two Long Packets corresponding to different regions of interest ROI means that processing of separating the Payload Data of the two Long Packets corresponding to different regions of interest ROI is not necessary. This makes it possible to eliminate processing time necessary for such separating processing in the present modification example.

### [Modification Example D]

In the communication system 1 according to the foregoing embodiment, in some cases, the synthesizer 147 puts the ROI information 120B in the Payload Data of the Long Packet in addition to the pixel data for one line in the compressed image data 147B. However, in the communication system 1 according to the foregoing embodiment, the synthesizer 147 may put the ROI information 120B in a data field (Data Field) SP of one or a plurality of short packets (Short Packets) provided in front of the Payload Data of the Long Packet and send the ROI information 120B, for example. For example, the synthesizer 147 may put at least one of the number of regions of interest ROI (the number of ROIs) in the captured image 111, the region number (or the priority 115) of each of the regions of interest ROI, the data length of each of the regions of interest ROI, or the image format of each of the regions of interest ROI in the data field SP of the one or the plurality of short packets provided in front of the Payload Data of the Long Packet, and send the at least one of them. For example, as illustrated in FIG. 12, the synthesizer 147 may put the number of regions of interest ROI (the number of ROIs) included in the captured image 111, the region number (or the priority 115) of each of the regions of interest ROI, the data length of each of the regions of interest ROI, and the image format of each of the regions of interest ROI in the data field SP of the one or the plurality of short packets provided in front of the Payload Data of the Long Packet, and send them.

In the present modification example, it is possible to obtain the ROI information 120B only by accessing the data field SP of the one or the plurality of short packets provided in front of the Payload Data of the Long Packet without accessing the Embedded Data. This makes it possible to increase processing speed in the information reception device 200, which makes it possible to achieve high transmission efficiency.

### [Modification Example E]

In the communication system 1 according to the foregoing embodiment and the modification examples (the modification examples A to D) thereof, the transmission data 120A is generated using the compressed image data 147B corresponding to a plurality of transmission images 116 obtained by omitting the image 118 from the plurality of ROI images 112. However, in the communication system 1 according to the foregoing embodiment and the modification examples (the modification examples A to D) thereof, the transmission data 120A may be generated in the transmission data 120A using the compressed image data 120A corresponding to the respective ROI images 112, regardless of whether or not the image 118 of the region of overlap ROO exists in images (ROI images 112) of the plurality of regions of interest ROI. That is, in the communication system 1 according to the foregoing embodiment and the modification examples (the modification examples A to D) thereof, the compressed image data 147B includes the compressed image data 120A corresponding to the respective ROI images 112.

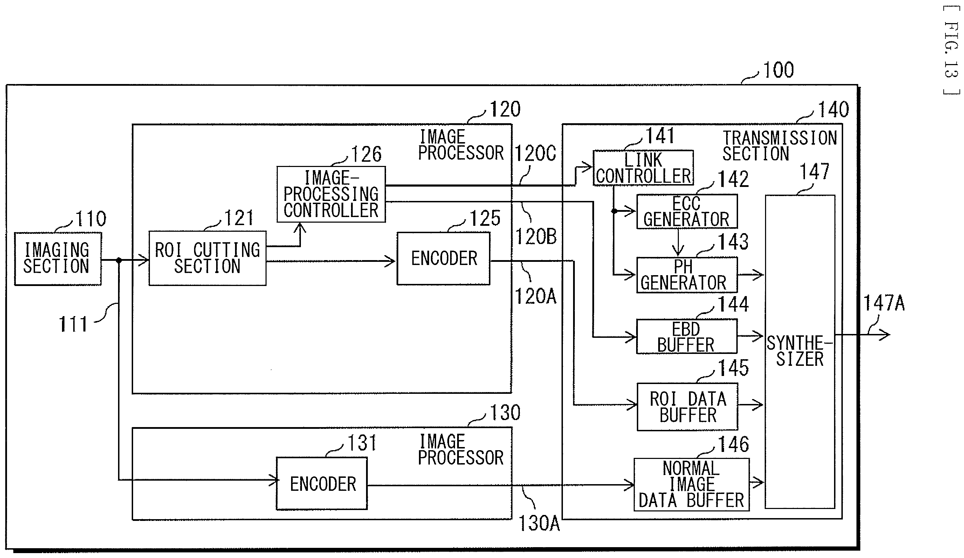

In such a case, for example, as illustrated in FIG. 13, it is possible to omit the ROI interpreter 122, the overlap detector 123, and the priority setting section 124 from the image processor 120. Even in a case where the ROI interpreter 122, the overlap detector 123, and the priority setting section 124 are omitted from the image processor 120 as described above, the transmission section 140 sends the ROI information 120B about the respective regions of interest ROI in the captured image 111 in the Embedded Data, similarly to the communication system 1 according to the foregoing embodiment and the modification examples (the modification examples A to D) thereof. The transmission section 140 further sends the image data (the compressed image data 120A) of the respective regions of interest ROI in the Payload Data of the Long Packet. In addition, the transmission section 140 sends the image data (the compressed image data 120A) of the respective regions of interest ROI in an image data frame, and sends the ROI information 120B about the respective regions of interest ROI in a header of the image data frame. This makes it possible to easily extract the image data (the ROI image 211) of each of the regions of interest ROI from the transmission data 147A in a device (the picture reception device 200) that has received the transmission data 147A sent from the picture transmission device 100. As a result, it is possible to transmit the regions of interest ROI even under various restrictions.

In addition, in the present modification example, it is possible for the transmission section 140 to send a plurality of ROI images 211 in the same packet in a case where the image data (the compressed image data 120A) of the respective regions of interest ROI is sent through the mutually common virtual channel. This eliminates the need to include an LP mode while the plurality of ROI images 211 are sent, which makes it possible to achieve high transmission efficiency.

Further, in the present modification example, in a case where the transmission section 140 sends the image data (the compressed image data 120A) of the respective regions of interest ROI through virtual channels different from each other, processing of separating the Payload Data of two Long Packets corresponding to different regions of interest ROI becomes unnecessary. This makes it possible to eliminate processing time necessary for such separating processing in the present modification example.

In addition, in the present modification example, in a case where the transmission section 140 puts the data type of each of the regions of interest ROI in the packet header PH of the Payload Data of the Long Packet and sends the data type of each of the regions of interest ROI, it is possible to obtain the data type of each of the regions of interest ROI only by accessing the packet header PH of the Payload Data of the Long Packet without accessing the Embedded Data. This makes it possible to increase processing speed in the information reception device 200, which makes it possible to achieve high transmission efficiency.

Further, in the present modification example, in a case where the transmission section 140 puts the ROI information 120B in the Payload Data of the Long Packet and sends the ROI information 120B, it is possible to obtain the ROI information 120B only by accessing the Payload Data of the Long Packet without accessing the Embedded Data. This makes it possible to increase processing speed in the information reception device 200, which makes it possible to achieve high transmission efficiency.

In addition, in the present modification example, in a case where the transmission section 140 puts the ROI information 120B in the data field SP of one or a plurality of short packets provided in front of the Payload Data of the Long Packet and sends the ROI information 120B, it is possible to obtain the ROI information 120B only by accessing the data field SP of the one or the plurality of short packets provided in front of the Payload Data of the Long Packet without accessing the Embedded Data. This makes it possible to increase processing speed in the information reception device 200, which makes it possible to achieve high transmission efficiency.

Further, in the present modification example, in a case where the transmission section 140 extracts the ROI information 120B about the respective regions of interest ROI from the Embedded Data included in the transmission data 147A and extracts the image (the ROI image 112) of each of the regions of interest ROI from the Payload Data of the Long Packet included in the transmission data 147A on the basis of the extracted ROI information 120B, it is possible to easily extract the image (the ROI image 112) of each of the regions of interest ROI from the transmission data 147A. As a result, it is possible to transmit the regions of interest ROI even under various restrictions.

### [Modification Example F]

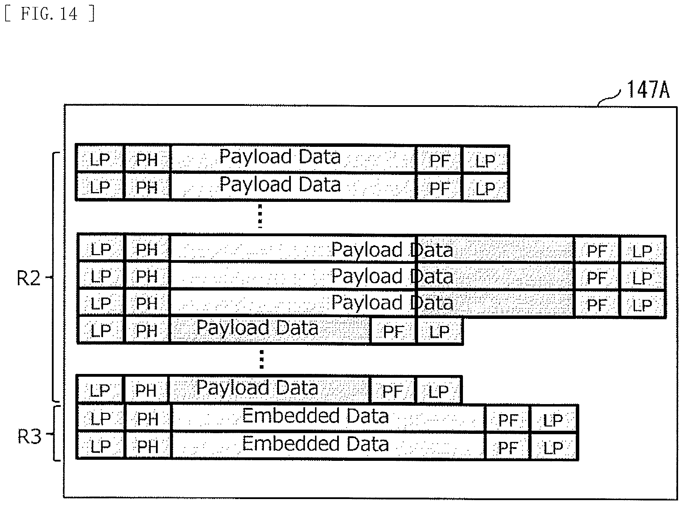

In the communication system 1 according to the foregoing embodiment and the modification examples (the modification examples A to E) thereof, the transmission section 140 sends the ROI information 120B about the respective regions of interest ROI in the header (the frame header region R1) of the image data frame. However, in the communication system 1 according to the foregoing embodiment and the modification examples (the modification examples A to E) thereof, the transmission section 140 may send the ROI information 120B about the respective regions of interest ROI in a footer (a frame footer region R3) of the image data frame. For example, as illustrated in FIG. 14, the transmission section 140 may send the ROI information 120B in the frame footer region R3 in a case where the ROI information 120B about the respective regions of interest ROI in the captured image 111 is sent in the Embedded Data. It is to be noted that in FIG. 14, the header region R1 is not illustrated for the sake of convenience. Even in a case where the present modification example is adopted, it is possible to transmit the regions of interest ROI even under various restrictions.

### [Modification Example G]

In the communication system 1 according to the foregoing embodiment and the modification examples (the modification examples A to F) thereof, the image data frame includes the frame header region R1, the packet region R2, and the frame footer R3. However, in the communication system 1 according to the foregoing embodiment and the modification examples (the modification examples A to F) thereof, the image data frame may not include the frame footer R3. In addition, in the foregoing modification example F, the image data frame may not include the frame header region R1.

Although the present disclosure has been described with reference to the embodiments and the modification examples thereof, the present disclosure is not limited to the foregoing embodiments, etc., and may be modified in a variety of ways. It is to be noted that effects described in this specification are merely illustrative. Effects of the present disclosure are not limited to the effects described in this specification. The present disclosure may have effects other than the effects described in this specification.

In addition, for example, the present disclosure may have the following configurations.
(1) A picture transmission device including:
   a transmission section that sends image data of ROIs (Regions Of Interest) in an image in Payload Data of a Long Packet and sends information about the ROIs in Embedded Data.
(2) The picture transmission device according to (1), in which the transmission section sends the image data of the respective ROIs through virtual channels different from each other.
(3) The picture transmission device according to (1), in which the transmission section sends the image data of the respective ROIs through a mutually common virtual channel.
(4) The picture transmission device according to (3), in which the transmission section puts data types of the respective ROIs in a packet header of the Payload Data, and sends the data types of the respective ROIs.
(5) The picture transmission device according to (3), in which the transmission section puts at least one of number of the ROIs included in the image, a region number of each of the ROIs, a data length of each of the ROIs, or an image format of each of the ROIs in the Payload Data, and sends the at least one of the number of the ROIs included in the image, the region number of each of the ROIs, the data length of each of the ROIs, or the image format of each of the ROIs.
(6) The picture transmission device according to (3), in which the transmission section puts at least one of number of the ROIs included in the image, a region number of each of the ROIs, a data length of each of the ROIs, or an image format of each of the ROIs in a Short Packet, and sends the at least one of the number of the ROIs included in the image, the region number of each of the ROIs, the data length of each of the ROIs, or the image format of each of the ROIs.
(7) The picture transmission device according to any one of (1) to (6), in which the transmission section sends the image data of the ROIs in an image data frame and sends the information about the ROIs in a header or a footer of the image data frame.
(8) The picture transmission device according to any one of (1) to (7), in which the transmission section sends a signal in MIPI (Mobile Industry Processor Interface) CSI (Camera Serial Interface)-2 specification, MIPI CSI-3 specification, or MIPI DSI (Display Serial Interface) specification.
(9) A picture transmission device including:
   a detector that detects a region of overlap on the basis of information about respective ROIs (Regions Of Interest) in an image, the region of overlap in which two or more of the ROIs overlap each other; and
   a transmission section that sends a plurality of pieces of third image data in Payload Data of a Long Packet and sends information about the respective ROIs in the image in Embedded Data, the plurality of pieces of third image data being obtained by omitting second image data of the region of overlap from a plurality of pieces of first image data of the ROIs in the image to avoid the second image data from being included redundantly in the plurality of pieces of fist image data.
(10) The picture transmission device according to (9), in which the transmission section sends the image data of the respective ROIs through virtual channels different from each other.
(11) The picture transmission device according to (9), in which the transmission section sends the image data of the respective ROIs through a mutually common virtual channel.
(12) The picture transmission device according to (11), in which the transmission section puts data types of the respective ROIs in a packet header of the Payload Data, and sends the data type of the respective ROIs.
(13) The picture transmission device according to (11), in which the transmission section puts at least one of number of the ROIs included in the image, a region number of each of the ROIs, a data length of each of the ROIs, or an image format of each of the ROIs in the Payload Data, and sends the at least one of the number of the ROIs included in the image, the region number of each of the ROIs, the data length of each of the ROIs, or the image format of each of the ROIs.
(14) The picture transmission device according to (9), in which the transmission section puts at least one of number of the ROIs included in the image, a region number of each of the ROIs, a data length of each of the ROIs, or an image format of each of the ROIs in a Data Field of a Short Packet, and sends the at least one of the number of the ROIs included in the image, the region number of each of the ROIs, the data length of each of the ROIs, or the image format of each of the ROIs.
(15) The picture transmission device according to any one of (9) to (14), in which the transmission section sends the image data of the ROIs in an image data frame and sends the information about the ROIs in a header or a footer of the image data frame.
(16) The picture transmission device according to any one of (9) to (15), in which the transmission section sends a signal in MIPI (Mobile Industry Processor Interface) CSI (Camera Serial Interface)-2 specification, MIPI CSI-3 specification, or MIPI DSI (Display Serial Interface) specification.
(17) A picture reception device including:
   a reception section that receives a transmission signal including image data of ROIs (Regions Of Interest) in an image and information about the ROIs, the image data of the ROIs being included in Payload Data of a Long Packet, the information about the ROIs being included in Embedded Data; and
   an information processor that extracts information about the ROIs from the Embedded Data included in the transmission signal received by the reception section, and extracts the image data of the ROIs from the Payload Data included in the transmission signal received by the reception section on the basis of the extracted information.
(18) The picture reception device according to (17), in which the information processor detects a region of overlap in which two or more of the ROIs overlap each other on the basis of the extracted information, and extracts image data of the respective ROIs from the Payload Data included in the transmission signal received by the reception section on the basis of the extracted information and information of the detected region of overlap.
(19) The picture reception device according to (17) or (18), in which the transmission section receives a signal in MIPI (Mobile Industry Processor Interface) CSI (Camera Serial Interface)-2 specification, MIPI CSI-3 specification, or MIPI DSI (Display Serial Interface) specification.

This application claims the benefit of Japanese Priority Patent Application JP2017-114690 filed with the Japan Patent Office on June 9, 2017, the entire contents of which are incorporated herein by reference.

It should be understood by those skilled in the art that various modifications, combinations, sub-combinations, and alterations may occur depending on design requirements and other factors insofar as they are within the scope of the appended claims or the equivalents thereof.

## Claims

1. A picture transmission device comprising:
a transmission section that sends image data of ROIs (Regions Of Interest) in an image in Payload Data of a Long Packet and sends information about the ROIs in Embedded Data.

2. The picture transmission device according to claim 1, wherein the transmission section sends the image data of the respective ROIs through virtual channels different from each other.

3. The picture transmission device according to claim 1, wherein the transmission section sends the image data of the respective ROIs through a mutually common virtual channel.

4. The picture transmission device according to claim 3, wherein the transmission section puts data types of the respective ROIs in a packet header of the Payload Data, and sends the data types of the respective ROIs.

5. The picture transmission device according to claim 3, wherein the transmission section puts at least one of number of the ROIs included in the image, a region number of each of the ROIs, a data length of each of the ROIs, or an image format of each of the ROIs in the Payload Data, and sends the at least one of the number of the ROIs included in the image, the region number of each of the ROIs, the data length of each of the ROIs, or the image format of each of the ROIs.

6. The picture transmission device according to claim 3, wherein the transmission section puts at least one of number of the ROIs included in the image, a region number of each of the ROIs, a data length of each of the ROIs, or an image format of each of the ROIs in a Short Packet, and sends the at least one of the number of the ROIs included in the image, the region number of each of the ROIs, the data length of each of the ROIs, or the image format of each of the ROIs.

7. The picture transmission device according to claim 1, wherein the transmission section sends the image data of the ROIs in an image data frame and sends the information about the ROIs in a header or a footer of the image data frame.

8. The picture transmission device according to claim 1, wherein the transmission section sends a signal in MIPI (Mobile Industry Processor Interface) CSI (Camera Serial Interface)-2 specification, MIPI CSI-3 specification, or MIPI DSI (Display Serial Interface) specification.

9. A picture transmission device comprising:
a detector that detects a region of overlap on a basis of information about respective ROIs (Regions Of Interest) in an image, the region of overlap in which two or more of the ROIs overlap each other; and
a transmission section that sends a plurality of pieces of third image data in Payload Data of a Long Packet and sends information about the respective ROIs in the image in Embedded Data, the plurality of pieces of third image data being obtained by omitting second image data of the region of overlap from a plurality of pieces of first image data of the ROIs in the image to avoid the second image data from being included redundantly in the plurality of pieces of fist image data.

10. The picture transmission device according to claim 9, wherein the transmission section sends the respective ROIs through virtual channels different from each other.

11. The picture transmission device according to claim 9, wherein the transmission section sends the respective ROIs through a mutually common virtual channel.

12. The picture transmission device according to claim 11, wherein the transmission section puts data types of the respective ROIs in a packet header of the Payload Data, and sends the data type of the respective ROIs.

13. The picture transmission device according to claim 11, wherein the transmission section puts at least one of number of the ROIs included in the image, a region number of each of the ROIs, a data length of each of the ROIs, or an image format of each of the ROIs in the Payload Data, and sends the at least one of the number of the ROIs included in the image, the region number of each of the ROIs, the data length of each of the ROIs, or the image format of each of the ROIs.

14. The picture transmission device according to claim 11, wherein the transmission section puts at least one of number of the ROIs included in the image, a region number of each of the ROIs, a data length of each of the ROIs, or an image format of each of the ROIs in a Data Field of a Short Packet, and sends the at least one of the number of the ROIs included in the image, the region number of each of the ROIs, the data length of each of the ROIs, or the image format of each of the ROIs.

15. The picture transmission device according to claim 9, wherein the transmission section sends the image data of the ROIs in an image data frame and sends the information about the ROIs in a header or a footer of the image data frame.

16. The picture transmission device according to claim 9, wherein the transmission section sends a signal in MIPI (Mobile Industry Processor Interface) CSI (Camera Serial Interface)-2 specification, MIPI CSI-3 specification, or MIPI DSI (Display Serial Interface) specification.

17. A picture reception device comprising:
a reception section that receives a transmission signal including image data of ROIs (Regions Of Interest) in an image and information about the ROIs, the image data of the ROIs being included in Payload Data of a Long Packet, the information about the ROIs being included in Embedded Data; and
an information processor that extracts information about the ROIs from the Embedded Data included in the transmission signal received by the reception section, and extracts the image data of the ROIs from the Payload Data included in the transmission signal received by the reception section on a basis of the extracted information.

18. The picture reception device according to claim 17, wherein the information processor detects a region of overlap in which two or more of the ROIs overlap each other on a basis of the extracted information, and extracts image data of the respective ROIs from the Payload Data included in the transmission signal received by the reception section on a basis of the extracted information and information of the detected region of overlap.

19. The picture reception device according to claim 17, wherein the transmission section receives a signal in MIPI (Mobile Industry Processor Interface) CSI (Camera Serial Interface)-2 specification, MIPI CSI-3 specification, or MIPI DSI (Display Serial Interface) specification.
